# EUROPEAN PATENT APPLICATION

(11) **EP 3 305 478 A1**
(43) Date of publication of application: **11.04.2018**
(21) Application number: 16799848.3
(22) Date of filing: 15.05.2016
(51) Int. Cl.: B25J 13/00

(54) **ROBOT DEVICE AND STEPPING MOTOR CONTROL DEVICE**

(30) Priority: 28.05.2015 JP 2015108688
(71) Applicant: Life Robotics Inc., Koto-ku Tokyo 135-0047 (JP)
(72) Inventor: YOON, Woo-Keun, Tokyo 135-0047 (JP)
(74) Representative: Herrero & Asociados, S.L.
(86) International application number: PCT/JP2016/064403
(87) International publication number: WO 2016/190140

(57) **Abstract**

Based on the premise that a step-out will occur in a stepping motor, this invention provides a suitable countermeasure for when a step-out occurs. A robot device includes: a robot arm mechanism having a joint; a stepping motor (310) that generates motive power that actuates the joint; a motor driver (210) that drives the stepping motor; a trajectory calculating section (105) that calculates a trajectory along which an attention point of the robot arm mechanism moves from a current position to a final target position; a command value outputting section (103) that outputs a command value in accordance with the trajectory calculated by the trajectory calculating section to the motor driver; and a step-out detecting section (216) that detects a step-out of the stepping motor. The robot device also includes a system control section (101). When a step-out is detected, the system control section controls the trajectory calculating section and the command value outputting section so as to recalculate a trajectory to the final target position from a position of the attention point that is shifted due to the step-out, and to move the attention point in accordance with the recalculated trajectory.

## Description

### FIELD

Embodiments described herein relate generally to a robot device and a stepping motor control device.

### BACKGROUND

In a stepping motor, since a rotation angle is in proportion to the number of pulse signals, fundamentally there is no necessity for a feedback circuit, and an open loop control is possible, and the stepping motor is thus more advantageous than an AC motor or a DC motor. However, on the other hand, if an overload is applied and the pulse frequency is too high, a so-called "step-out" occurs in which the motor becomes out of step and the control is disturbed. If a step-out occurs, the stepping motor stops. Further, even when operations are resumed, it is necessary to return to a reference position in order to reach a target position, and the resulting downtime is unavoidable. The occurrence of the step-out phenomenon is inevitable in a stepping motor, and therefore even though various methods have been devised heretofore so that a stepping motor does not give rise to a step-out, the majority of such methods have dealt only with the symptoms of the problem.

An object of the present invention is, based on the premise that a step-out will occur in a stepping motor, to provide a suitable countermeasure for when the step-out occurs.

A robot device according to the present embodiment includes: a robot arm mechanism having a joint; a stepping motor that generates motive power that actuates the joint; a motor driver that drives the stepping motor; a trajectory calculating section that calculates a trajectory along which an attention point of the robot arm mechanism moves from a current position to a final target position; a command value outputting section that outputs a command value that is in accordance with the trajectory calculated by the trajectory calculating section to the motor driver; and a step-out detecting section that detects a step-out of the stepping motor. The robot device also includes a system control section. When a step-out is detected, the system control section controls the trajectory calculating section and the command value outputting section so as to recalculate a trajectory to the final target position from a position of the attention point that is shifted due to the step-out, and to move the attention point in accordance with the recalculated trajectory.

### BRIEF DESCRIPTION OF THE VIEWS OF THE DRAWINGS

FIG. 1 is an external perspective view of a robot arm mechanism of a robot device according to the present embodiment;
FIG. 2 is a side view illustrating the internal structure of the robot arm mechanism illustrated in FIG. 1;
FIG. 3 is a view illustrating the configuration of the robot arm mechanism in FIG. 1 by representation with graphic symbols;
FIG. 4 is a block diagram illustrating the configuration of the robot device according to the present embodiment;
FIG. 5 is a flowchart illustrating processing procedures at the time of a step-out which are performed by an operation control device shown in FIG. 4;
FIG. 6 is a view illustrating a plurality of trajectories after the step-out in FIG. 5; and
FIG. 7 is a view illustrating a procedure in step S13 in FIG. 5.

### DETAILED DESCRIPTION

Hereinafter, a robot device according to the present embodiment is described with reference to the accompanying drawings. The robot device according to the present embodiment includes an operation control device. The operation control device functions as an independent device that controls a motor driver of each joint of an articulated joint arm mechanism which the robot device is equipped with. The operation control device can also be incorporated into the robot device that is equipped with the articulated joint arm mechanism. The operation control device of the robot device according to the present embodiment can be applied to various forms of articulated joint arm mechanisms. Here, an articulated joint arm mechanism in which one of a plurality of joints is a linear extension and retraction joint is described as an example. In the following description, the same reference numerals denote components that have substantially identical functions and configurations, and a repeated description of such components is made only if necessary.

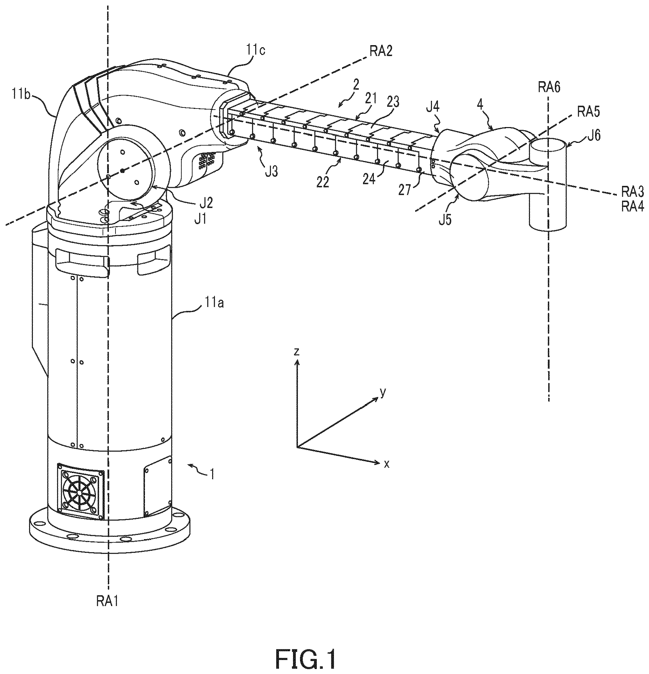

FIG. 1 is an external perspective view of the robot arm mechanism according to the present embodiment. The robot arm mechanism includes a substantially cylindrical base 10, an arm section 2 that is connected to the base 10, and a wrist section 4 that is attached to the tip of the arm section 2. An unshown adapter is provided at the wrist section 4. For example, the adapter is provided at a rotating section on a sixth rotation axis RA6 that is described later. A robot hand configured according to the use is attached to the adapter provided at the wrist section 4.

The robot arm mechanism includes a plurality of joints, in this example, six joints, J1, J2, J3, J4, J5 and J6. The plurality of joints J1, J2, J3, J4, J5 and J6 are arranged in the foregoing order from the base 10. Generally, a first, a second and a third joint J1, J2 and J3 are called "root three axes", and a fourth, a fifth and a sixth joint J4, J5 and J6 are called "wrist three axes" that change the posture of the robot hand. The wrist section 4 includes the fourth, fifth and sixth joints J4, J5 and J6. At least one of the joints J1, J2 and J3 constituting the root three axes is a linear extension and retraction joint. Herein, the third joint J3 is configured as a linear extension and retraction joint, in particular, as a joint with a relatively long extension distance. The arm section 2 represents an extension and retraction portion of the linear extension and retraction joint J3 (third joint J3).

The first joint J1 is a torsion joint that rotates on a first rotation axis RA1 and which is supported, for example, perpendicularly to a base surface. The second joint J2 is a bending joint that rotates on a second rotation axis RA2 that is arranged perpendicular to the first rotation axis RA1. The third joint J3 is a joint at which the arm section 2 linearly extends or retracts along a third axis (movement axis) RA3 that is arranged perpendicular to the second rotation axis RA2.

The fourth joint J4 is a torsion joint that rotates on a fourth rotation axis RA4. The fourth rotation axis RA4 substantially matches the third movement axis RA3 when a seventh joint J7 that is described later is not rotated, that is, when the entire arm section 2 is a rectilinear shape. The fifth joint J5 is a bending joint that rotates on a fifth rotation axis RA5 that is orthogonal to the fourth rotation axis RA4. The sixth joint J6 is a bending joint that rotates on the sixth rotation axis RA6 that is arranged orthogonal to the fourth rotation axis RA4 and perpendicular to the fifth rotation axis RA5.

An arm support body (first support body) 11a forming the base 10 has a cylindrical hollow structure formed around the first rotation axis RA1 of the first joint J1. The first joint J1 is attached to a fixed base (not shown). When the first joint J1 rotates, the arm section 2 turns left and right together with the axial rotation of the first support body 11a. The first support body 11a may be fixed to a supporting surface. In such case, the arm section 2 is provided with a structure that turns independently of the first support body 11a. A second support body 11b is connected to an upper part of the first support body 11a.

The second support body 11b has a hollow structure continuous to the first support body 11a. One end of the second support body 11b is attached to a rotating section of the first joint J1. The other end of the second support body 11b is opened, and a third support body 11c is set rotatably on the rotation axis RA2 of the second joint J2. The third support body 11c has a hollow structure made from a scaly outer covering that communicates with the first support body 11a and the second support body 11b. In accordance with the bending rotation of the second joint J2, a rear part of the third support body 11c is accommodated in or sent out from the second support body 11b. The rear part of the arm section 2 constituting the linear extension and retraction joint J3 (third joint J3) of the robot arm mechanism is housed inside the continuous hollow structure of the first support body 11a and the second support body 11b by retraction thereof.

The third support body 11c is set rotatably, at the lower part of its rear end, on the second rotation axis RA2 with respect to a lower part of an open end of the second support body 11b. In this way, the second joint J2 serving as a bending joint that rotates on the second rotation axis RA2 is formed. When the second joint J2 rotates, the arm section 2 rotates vertically, i.e., rotates upward and downward, on the second rotation axis RA2 of the arm section 2.

The fourth joint J4 is a torsion joint having the fourth rotation axis RA4 which typically abuts an arm center axis along the extension and retraction direction of the arm section 2, that is, the third movement axis RA3 of the third joint J3. When the fourth joint J4 rotates, the wrist section 4 and the robot hand attached to the wrist section 4 rotate on the fourth rotation axis RA4. The fifth joint J5 is a bending joint having the fifth rotation axis RA5 that is orthogonal to the fourth rotation axis RA4 of the fourth joint J4. When the fifth joint J5 rotates, the wrist section 4 pivots up and down from the fifth joint J5 to its tip together with the robot hand (in the vertical direction around the fifth rotation axis RA5). The sixth joint J6 is a bending joint having the sixth rotation axis RA6 that is orthogonal to the fourth rotation axis RA4 of the fourth joint J4 and is perpendicular to the fifth rotation axis RA5 of the fifth joint J5. When the sixth joint J6 rotates, the robot hand turns left and right.

As described above, the robot hand attached to the adapter of the wrist section 4 is moved to a given position by the first, second and third joints J1, J2 and J3, and is disposed in a given posture by the fourth, fifth and sixth joints J4, J5 and J6. In particular, the length of the extension distance of the arm section 2 of the third joint J3 makes it possible to cause the robot hand to reach objects over a wide range from a position close to the base 10 to a position far from the base 10. The third joint J3 is characterized by linear extension and retraction operations realized by a linear extension and retraction mechanism constituting the third joint J3, and by the length of the extension distance thereof.

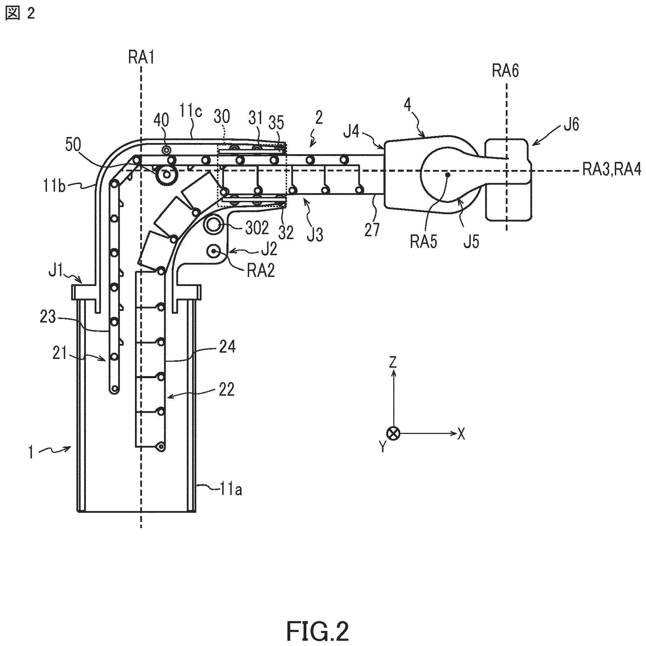

### (Description of Internal Structure) FIG. 2

FIG. 2 is a perspective view illustrating the internal structure of the robot arm mechanism in FIG. 1. The linear extension and retraction mechanism includes the arm section 2 and an ejection section 30. The arm section 2 has a first connection piece string 21 and a second connection piece string 22. The first connection piece string 21 includes a plurality of first connection pieces 23. The first connection pieces 23 are formed in a substantially flat plate shape. The first connection pieces 23 which are arranged in front and behind each other are connected to each other in a string shape in a bendable manner by pins at their edge parts. The first connection piece string 21 can bend inward and outward freely.

The second connection piece string 22 includes a plurality of second connection pieces 24. The respective second connection pieces 24 are formed as a short groove-like body having an inverted U-shape in transverse section. The second connection pieces 24 which are arranged in front and behind each other are connected to each other in a string shape in a bendable manner by pins at their bottom edge parts. The second connection piece string 22 can bend inward. Because the cross section of each of the second connection pieces 24 is an inverted U-shape, the second connection piece string 22 does not bend outward since side plates of adjacent second connection pieces 24 collide together. Note that, a face that faces the second rotation axis RA2 of the first and second connection pieces 23 and 24 is referred to as an inner face, and a face on the opposite side to the inner face is referred to as an outer face. The foremost first connection piece 23 in the first connection piece string 21, and the foremost second connection piece 24 in the second connection piece string 22 are connected by a head piece 27. For example, the head piece 27 has a shape that combines the second connection piece 24 and the first connection piece 23.

In the ejection section 30, a plurality of upper rollers 31 and a plurality of lower rollers 32 are supported by a frame 35 having a rectangular cylinder shape. For example, the plurality of upper rollers 31 are arranged along the arm center axis at intervals that are approximately equivalent to the length of the first connection piece 23. Similarly, the plurality of lower rollers 32 are arranged along the arm center axis at intervals that are approximately equivalent to the length of the second connection piece 24. At the rear of the ejection section 30, a guide roller 40 and a drive gear 50 are provided so as to face each other with the first connection piece string 21 sandwiched therebetween. The drive gear 50 is connected to a stepping motor 330 through an unshown decelerator. A linear gear is formed along the connecting direction on the inner face of the first connection piece 23. When a plurality of the first connection pieces 23 are aligned in a rectilinear shape, the linear gears of the first connection pieces 23 connect in a rectilinear shape to thereby form a long linear gear. The drive gear 50 is meshed with the linear gear having the rectilinear shape. The linear gear that is connected in a rectilinear shape constitutes a rack-and-pinion mechanism together with the drive gear 50.

### (Description of Junction Structure)

When the arm is extended, a motor 55 drives and the drive gear 50 rotates in the forward direction so that the first connection piece string 21 is placed in a posture in which the first connection piece string 21 is parallel to the arm center axis and is guided to between the upper rollers 31 and the lower rollers 32 by the guide roller 40. Accompanying movement of the first connection piece string 21, the second connection piece string 22 is guided between the upper rollers 31 and the lower rollers 32 of the ejection section 30 by an unshown guide rail arranged at the rear of the ejection section 30. The first and second connection piece strings 21 and 22 that were guided between the upper rollers 31 and the lower rollers 32 are pressed against each other. Thereby, a columnar body is constituted by the first and second connection piece strings 21 and 22. The ejection section 30 joins the first and second connection piece strings 21 and 22 to form the columnar body, and also supports the columnar body in the upward, downward, left and right directions. The columnar body that is formed by joining of the first and second connection piece strings 21 and 22 is firmly maintained by the ejection section 30, and thus the contact state between the first and second connection piece strings 21 and 22 is maintained. When the joined state between the first and second connection piece strings 21 and 22 is maintained, bending of the first and second connection piece strings 21 and 22 is restricted in a reciprocal manner by the first and second connection piece strings 21 and 22. Thus, the first and second connection piece strings 21 and 22 constitute a columnar body that has a certain rigidity. The term "columnar body" refers to a columnar rod body that is formed by the first connection piece string 21 being joined to the second connection piece string 22. In the columnar body, the second connection pieces 24 are, together with the first connection pieces 23, constituted in a tubular body having various cross-sectional shapes overall. The tubular body is defined as a shape in which the top, bottom, left and right sides are enclosed by a top plate, a bottom plate and two side plates, and a front end section and rear end section are open. The columnar body formed by joining of the first and second connection piece strings 21 and 22 is linearly sent out along the third movement axis RA3 starting with the head piece 27 in the outward direction from an opening of the third support body 11c.

When the arm is retracted, the motor 55 drives and the drive gear 50 is rotated backward, whereby the first connection piece string 21 that is engaged with the drive gear 50 is drawn back into the first support body 11a. Accompanying the movement of the first connection piece string, the columnar body is drawn back into the third support body 11c. The columnar body that has been drawn back separates at the rear of the ejection section 30. For example, the first connection piece string 21 constituting one part of the columnar body is sandwiched between the guide roller 40 and the drive gear 50, and the second connection piece string 22 constituting one part of the columnar body is pulled downward by gravitational force, and as a result the second connection piece string 22 and the first connection piece string 21 break away from each other. The first and second connection piece strings 21 and 22 that broke away from each other revert to their respective bendable states, are each bent to the inner side in the same direction, and are housed substantially parallel to each other inside the first support body 11a.

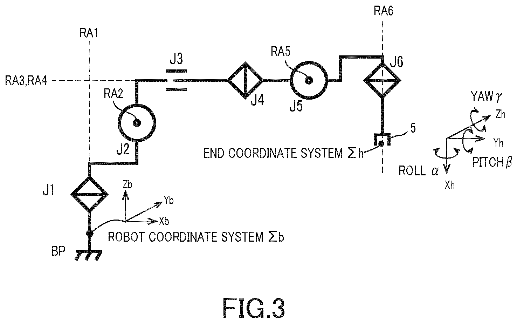

### (Graphic Symbol Representation) FIG. 3

FIG. 3 is a view illustrating the robot arm mechanism in FIG. 1 by representation with graphic symbols. In the robot arm mechanism, three positional degrees of freedom are realized by the first joint J1, the second joint J2 and the third joint J3 constituting the root three axes. Further, three postural degrees of freedom are realized by the fourth joint J4, the fifth joint J5 and the sixth joint J6 constituting the wrist three axes.

A robot coordinate system Σb is a coordinate system that takes a given position on the first rotation axis RA1 of the first joint J1 as the origin. In the robot coordinate system Σb, three orthogonal axes (Xb, Yb, Zb) are defined. The Zb axis is an axis that is parallel to the first rotation axis RA1. The Xb axis and the Yb axis are orthogonal to each other, and are orthogonal to the Zb axis. An end coordinate system Σh is a coordinate system that takes a given position (end reference point) of the robot hand 5 that is attached to the wrist section 4 as the origin. For example, in a case where the robot hand 5 is a two-fingered hand, the position of the end reference point (hereunder, referred to simply as "end") is defined as the center position between the two fingers. In the end coordinate system Σh, three orthogonal axes (Xh, Yh, Zh) are defined. The Zh axis is an axis that is parallel to the sixth rotation axis RA6. The Xh axis and the Yh axis are orthogonal to each other, and are orthogonal to the Zh axis. For example, the Xh axis is an axis that is parallel to the longitudinal direction of the robot hand 5. The end posture is given as a rotation angle (rotation angle around the Xh axis (yaw angle)) α, a rotation angle (pitch angle) β around the Yh axis, and a rotation angle (roll angle) γ around the Zh axis) that rotate around the respective orthogonal three axes with respect to the robot coordinate system Σb of the end coordinate system Σh.

The first joint J1 is arranged between the first support body 11a and the second support body 11b, and is configured as a torsion joint that rotates on the rotation axis RA1. The rotation axis RA1 is arranged perpendicular to a base plane BP of a base mount on which a fixed section of the first joint J1 is disposed.

The second joint J2 is configured as a bending joint that rotates on the rotation axis RA2. The rotation axis RA2 of the second joint J2 is provided parallel to the Xb axis on a spatial coordinate system. The rotation axis RA2 of the second joint J2 is provided in a perpendicular direction relative to the rotation axis RA1 of the first joint J1. In addition, relative to the first joint J1, the second joint J2 is offset in two directions, namely, the direction of the first rotation axis RA1 (Zb-axis direction), and the Yb-axis direction that is perpendicular to the first rotation axis RA1. The second support body 11b is attached to the first support body 11a in a manner so that the second joint J2 is offset in the aforementioned two directions relative to the first joint J1. A virtual arm rod portion (link portion) connecting the first joint J1 to the second joint J2 has a crank shape in which two hook-shaped bodies that each have a tip that is bent at a right angle are combined. The virtual arm rod portion is constituted by the first and second support bodies 11a and 11b which have a hollow structure.

The third joint J3 is configured as a linear extension and retraction joint that rotates on the movement axis RA3. The movement axis RA3 of the third joint J3 is provided in a perpendicular direction relative to the rotation axis RA2 of the second joint J2. When the arm section 2 is in a horizontal alignment pose in which the rotation angle of the second joint J2 is zero degrees, that is, the upward/downward rotation angle of the arm section 2 is zero degrees, the movement axis RA3 of the third joint J3 is also provided in a perpendicular direction to the rotation axis RA1 of the first joint J1 together with the rotation axis RA2 of the second joint J2. On the spatial coordinate system, the movement axis RA3 of the third joint J3 is provided parallel to the Yb axis that is perpendicular to the Xb axis and Zb axis. In addition, relative to the second joint J2, the third joint J3 is offset in two directions, namely, the direction of the rotation axis RA2 thereof (Yb-axis direction), and the direction of the Zb axis that is orthogonal to the movement axis RA3. The third support body 11c is attached to the second support body 11b in a manner so that the third joint J3 is offset in the aforementioned two directions relative to the second joint J2. A virtual arm rod portion (link portion) connecting the second joint J2 to the third joint J3 has a hook-shaped body in which the tip is bent at a right angle. The virtual arm rod portion is constituted by the second and third support bodies 11b and 11c.

The fourth joint J4 is configured as a torsion joint that rotates on the rotation axis RA4. The rotation axis RA4 of the fourth joint J4 is arranged so as to substantially match the movement axis RA3 of the third joint J3.

The fifth joint J5 is configured as a bending joint that rotates on the rotation axis RA5. The rotation axis RA5 of the fifth joint J5 is arranged so as to be substantially orthogonal to the movement axis RA3 of the third joint J3 and the rotation axis RA4 of the fourth joint J4.

The sixth joint J6 is configured as a torsion joint that rotates on the rotation axis RA6. The rotation axis RA6 of the sixth joint J6 is arranged so as to be substantially orthogonal to the rotation axis RA4 of the fourth joint J4 and the rotation axis RA5 of the fifth joint J5. The sixth joint J6 is provided for turning the robot hand 5 as an end effector to the left and right. The sixth joint J6 may be configured as a bending joint in which the rotation axis RA6 thereof is substantially orthogonal to the rotation axis RA4 of the fourth joint J4 and the rotation axis RA5 of the fifth joint J5.

By replacing one bending joint among the root three axes of the plurality of joints J1 to J6 with a linear extension and retraction joint, causing the second joint J2 to be offset in two directions relative to the first joint J1, and causing the third joint J3 to be offset in two directions relative to the second joint J2 in this way, the robot arm mechanism of the robot device according to the present embodiment structurally eliminates a singular point posture.

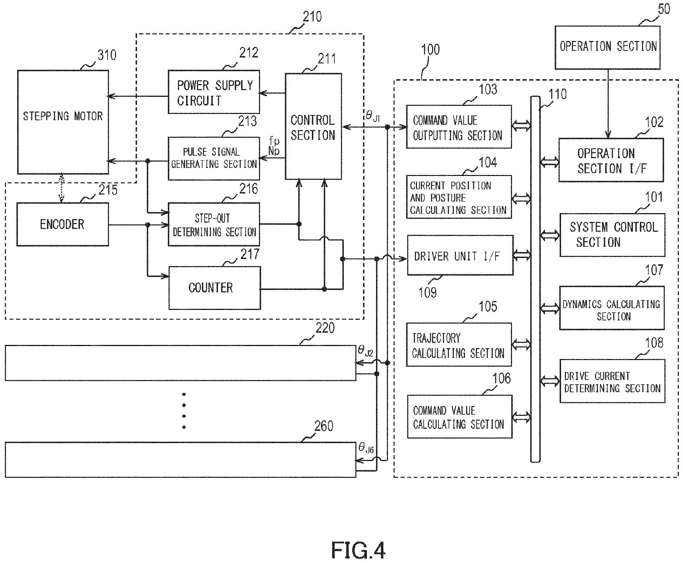

### (Block Configuration Diagram) FIG. 4

FIG. 4 is a block diagram illustrating the configuration of the robot device according to the present embodiment. Stepping motors 310, 320, 330, 340, 350 and 360 are provided as actuators in the joints J1, J2, J3, J4, J5 and J6, respectively, of the robot arm mechanism of the robot device according to the present embodiment. Driver units 210, 220, 230, 240, 250 and 260 are electrically connected to the stepping motors 310, 320, 330, 340, 350 and 360. Typically, the driver units 210, 220, 230, 240, 250 and 260 are installed side-by-side with the stepping motors 310, 320, 330, 340, 350 and 360 that are the control objects. The driver units 210, 220, 230, 240, 250 and 260 have the same configuration as each other, and perform the same control with respect to the stepping motor that is the control object in accordance with a control signal from an operation control device 100. Hereunder, only the driver unit 210 will be described, and a description of the other driver units 220, 230, 240, 250 and 260 is omitted.

The driver unit 210 controls driving and stopping of the stepping motor 310. The driver unit 210 has a control section 211, a power supply circuit 212, a pulse signal generating section 213, a rotary encoder 215, a step-out determining section 216 and a counter 217. The control section 211 performs centralized control of the driver unit 210 in accordance with a control signal that is input from the operation control device 100.

Specifically, the control section 211 inside the driver unit 210 receives a position command signal relating to a target position (distinguished from a final target position that is described later) after the passage of a unit time Δt of the rotation angle of the stepping motor 310, that is input from the operation control device 100. The control signal is given as a joint variable (a joint angle; in the case of J3, the extension distance) after Δt. The control section 211 determines a number of pulses Np based on the current position and the target position of the rotation angle of the stepping motor 310. Specifically, the control section 211 calculates a rotation angle difference based on the current position and the target position of the rotation angle of the stepping motor 310, and determines the number of pulses Np of a pulse signal by dividing the rotation angle difference between the current position and the target position by a step angle of, for example, 0.72 degrees of the stepping motor 310. Further, the control section 211 determines a pulse frequency fp based on the determined number of pulses and the unit time Δt. Specifically, the control section 211 multiplies the number of pulses Np by the unit time Δt, and determines the pulse frequency fp by calculating the reciprocal thereof. The control section 211 outputs a pulse number command signal relating to the number of pulses, and a pulse frequency command signal relating to the pulse frequency to the pulse signal generating section 213. The pulse signal generating section 213 outputs, for each phase of the stepping motor 310, a pulse signal having a number of pulses that is instructed by the pulse number command signal at a frequency that is instructed by the pulse frequency command signal, that is, at a period that is the inverse of the relevant frequency. The pulse signal that is output from the pulse signal generating section 213 is also taken in by the step-out determining section 216.

A drive current command signal indicating a drive current value of the stepping motor 310 is input to the control section 211 from the operation control device 100. The control section 211 outputs a control signal in accordance with the drive current command signal to the power supply circuit 212. The power supply circuit 212 generates a drive current having the specified drive current value using power supplied from an external power supply portion which is not shown in the drawing. The generated drive current is supplied to the stepping motor 310. The stepping motor 310 is driven by the drive current supplied from the power supply circuit 212 and rotated in accordance with a pulse signal that is output from the pulse signal generating section 213.

The rotary encoder 215 is connected to the drive shaft of the stepping motor 310, and outputs a pulse signal (encoder pulse) at each constant rotation angle that is, for example, 0.18 degrees. The counter 217 calculates a count value by adding or subtracting, in accordance with the direction of rotation, the number of encoder pulses output from the rotary encoder 215. The count value is reset at the reference position (origin) of the drive shaft of the stepping motor 310. The joint angle (joint variable) of a joint is determined based on the number of reset operations and the count value.

The step-out determining section 216 determines whether a step-out has occurred or a step-out has not occurred at the stepping motor 310 by comparing the count value of the encoder pulses with the pulse signals output from the pulse signal generating section 213. The step-out determining section 216 repeats counting/resetting of the encoder pulses in synchrony with the pulse signals. A step angle that the stepping motor 310 rotates in one cycle of the pulse signals is fixed. The number of encoder pulses corresponding to the step angle is fixed. If the count value for the encoder pulses matches a number that corresponds to the step angle, rotation of the stepping motor 310 is in sync with the pulse signals, that is, a step-out has not occurred. On the other hand, if the count value for the encoder pulses does not match the number corresponding to the step angle, rotation of the stepping motor 310 is not in sync with the pulse signals, that is, a step-out has occurred. When a step-out has occurred at the stepping motor 310, the step-out determining section 216 generates a step-out detection signal.

The operation control device 100 includes a system control section 101, an operation section interface 102, a command value outputting section 103, a current position and posture calculating section 104, a trajectory calculating section 105, a command value calculating section 106, a dynamics calculating section 107, a drive current determining section 108 and a driver unit interface 109. Data relating to the count value (represents the rotation angle from the reference position) and the reset frequency (represents the rotation frequency) counted by the counter 217 that is sent from the driver unit 210 and a step-out detection signal that is output from the step-out determining section 216 are input through the driver unit interface 109 to the operation control device 100. The operation control device 100 of the robot device according to the present embodiment can be applied, as an independent device, to another apparatus or mechanism that uses a stepping motor.

### (System Control Section)

The system control section 101 has a CPU (Central Processing Unit) and a semiconductor memory or the like, and performs overall control of the operation control device 100. Each section is connected via a control/data bus 110 to the system control section 101.

### (Operation Section)

An operation section 50 is connected through the operation section interface 102 to the operation control device 100. The operation section 50 functions as an input interface for allowing the user to perform input operations to change the position of the attention point or to change the posture of the wrist section 4 or robot hand (end effector) and to also change a time. The operation control device 100 executes computational processing such as a movement and posture change with respect to, for example, the end of a two-fingered hand as an attention point (control point). For example, the operation section 50 is equipped with a joy stick or the like for specifying a final target position to which to move the robot hand and a movement time. For example, the final target position and the movement time of the robot hand are input based on a direction in which the joy stick is operated, an angle at which the joy stick is tilted, and the operational acceleration of the joy stick. Note that, the input devices constituting the operation section 50 can be replaced with other devices, for example, a mouse, a keyboard, a trackball, and a touch panel.

### (Command Value Outputting Section)

In accordance with control by the system control section 101, the command value outputting section 103 outputs a command value (joint angle after Δt (joint variable)) for each of the joints J1 to J6 which is calculated by the command value calculating section 106, described later, to the driver units 210, 220, 230, 240, 250 and 260, respectively. Specifically, the command value outputting section 103 outputs position command signals in accordance with the joint variables for each of the joints J1 to J6 which were calculated by the command value calculating section 106, described later, to the driver units 210, 220, 230, 240, 250 and 260. Further, the command value outputting section 103 outputs drive current command signals that are in accordance with drive current values that drive the respective joints J1 to J6 that were determined by the drive current determining section 108, described later, to the driver units 210, 220, 230, 240, 250 and 260.

### (Current Position and Posture Calculating Section)

Based on joint variables for the respective joints J1, J2, J3, J4, J5 and J6, the current position and posture calculating section 104 calculates a position and posture of an end attention point as seen from the robot coordinate system by forward kinematics in conformity with a predefined homogeneous transformation matrix that is in accordance with link parameters of the arm structure. Note that, the term "joint variable" refers to a positive or negative rotation angle from the reference position with respect to the joints J1, J2, J4, J5 and J6, and refers to an extension distance (linear-motion displacement) from a most retracted state with respect to the joint J3.

The current position and posture calculating section 104 calculates a joint variable vector -θ relating to the joints J1 to J6 based on count values that were counted by the counter 217 of each of the driver units 210, 220, 230, 240, 250 and 260. The joint variable vector -θ is a set of joint variables (θ_{J1}, θ_{J2}, L_{J3}, θ_{J4}, θ_{J5} and θ_{J6}) given by joint angles θ_{J1}, θ_{J2}, θ_{J4}, θ_{J5} and θ_{J6} of the rotary joints J1, J2, J4, J5 and J6 and an extension and retraction length L_{J3} of the linear extension and retraction joint J3. For example, the current position and posture calculating section 104 holds a cumulative count value up to a time before start-up of the stepping motor 310 of the joint J1, and updates the cumulative count value by adding a count value that is counted during start-up to the cumulative count value. The current position and posture calculating section 104 calculates a rotation angle from the reference position of the stepping motor 310 by multiplying the cumulative count value by a step angle that corresponds to a count of 1, and thereby identifies the joint variable of the joint J1. The current position and posture calculating section 104 identifies the joint variables of the other joints J2 to J6 by a similar method.

The current position and posture calculating section 104 calculates the position (x, y, z) of the end attention point and end posture (α, β, γ) as seen from the robot coordinate system Σb by means of a homogeneous transformation matrix K (parameters (θ_{J1}, θ_{J2}, L_{J3}, θ_{J4}, θ_{J5}, θ_{J6})). The homogeneous transformation matrix K is a determinant that defines the relation between the end coordinate system Σh and the robot coordinate system Σb. The homogeneous transformation matrix K is determined by the relation between links (link lengths and torsional angles of links) constituting the robot arm mechanism and the relation between the axes of the joints (distances between links and angles between links). For example, by substituting the current joint variable vector -θ₀ (θ_{0-J1}, θ_{0-J2}, L_{0-J3}, θ_{0-J4}, θ_{0-J5}, θ_{0-J6}) of the robot arm mechanism into the homogeneous transformation matrix K, the current position and posture calculating section 104 calculates the current position P0 (xo, yo, zo) of the end and the end posture ϕ₀ (α₀, β₀, γ₀) as seen from the robot coordinate system Σb.

### (Trajectory Calculating Section)

Based on the current position and posture of the end and the final target position and posture of the end, the trajectory calculating section 105 calculates a sequence of points for target positions of the end for the respective unit times Δt (control period, for example 10 ms) that are connected to each other in the relevant interval. The current position and posture of the end is obtained from computational processing by the current position and posture calculating section 104. The final target position and posture of the end and the movement time are, for example, input by the user through the operation section 50. The trajectory calculating section 105 calculates the trajectory of the end (hereunder, referred to as "end trajectory") by substituting each parameter into a preset function that takes the current position and current posture of the end and the final target position and final target posture of the end as parameters. The trajectory calculating section 105 calculates a target position for each unit time Δt on the end trajectory. An arbitrary method is adopted as the trajectory calculation method. The unit time Δt is a fixed value as a control period, and for example is set to 10 ms by the user. Based on a movement time width T required for movement from the current position to the final target position of the end and the unit time Δt, the trajectory calculating section 105 determines a number m (= T/Δt) of target positions, and calculates target positions (p1, p2... pm (m = T/Δt)) for the respective unit times Δt on the end trajectory. In this case, a target position is assumed to be a parameter that gives both a position and a posture of the end.

Although described in detail later, when a step-out is detected, the trajectory calculating section 105 can recalculate five kinds of trajectories under the control of the system control section 101. First to third trajectories are trajectories that arrive at the final target position through different routes from the position (movement resumption position) of the attention point of the hand that is shifted from the original trajectory due to the step-out. A fourth and fifth trajectory are trajectories that return to the position at which movement started, through different routes from the movement resumption position. When a step-out is detected, one trajectory is selected from these five trajectories, and movement is controlled along the selected trajectory.

Note that, at the trajectory calculating section 105, the trajectory calculation method is arbitrary, and a plurality of functions may be preset in advance. For example, the trajectory calculating section 105 changes the function to be used for calculating the end trajectory, in accordance with control of the system control section 101. For example, after a step-out is detected, the trajectory calculating section 105 recalculates the end trajectory by using a different function to a function that is normally used to calculate the end trajectory. For example, an end trajectory that is recalculated after detection step-out is equivalent to the shortest route linking a position P0' after step-out detection and a final target position P1. Further, the end trajectory that is recalculated after step-out detection has a trajectory such that the end is drawn back a predetermined distance toward the position at the time of step-out detection from the position after step-out detection.

### (Command Value Calculating Section)

The command value calculating section 106 calculates a plurality of joint variable vectors corresponding to the respective target positions arranged at periods of Δt on the calculated trajectory. Note that, the term "joint variable vector" refers to six joint variables of the joints J1 to J6, that is, six variables that are the rotation angles of the rotary joints J1, J2, and J4 to J6 and the arm extension and retraction length of the linear extension and retraction joint J3. The computational processing of the command value calculating section 106 is described later.

### (Dynamics Calculating Section)

The dynamics calculating section 107 calculates the respective torques (driving torques) for the stepping motors 310 to 360 that are provided for each of the joints J1 to J6 which are required to move the end from a target position to the next target position after Δt. Further, the dynamics calculating section 107 calculates the respective torques (static torques) required at each joint to make the arm section 2 static. The static torque that is required for the respective joints is an equivalent torque in the opposite direction to a load torque acting on the relevant joint that is calculated based on the center of mass of a portion forward of the joint and a distance from the rotation axis of the joint to the center of gravity and the like, that is, the required static torque is a torque that counterbalances the load torque produced by the joint's own weight.

The required torques for each of the stepping motors 310 to 360 are calculated based on, for each link connecting the joints J1 and J6 of the robot arm mechanism, the center of gravity position, the center of gravity mass, the link length and the inertia tensor, as well as the joint variable (rotation angle position or linear-motion displacement) of the joint, the joint angular velocity, the joint angular acceleration and the like using a dynamics model data relating to the joints J1 to J6. Note that the term "dynamics model" refers to a model relating to dynamic characteristics of the motor.

### (Drive Current Determining Section)

The drive current determining section 108 determines a drive current value for each of the stepping motors 310, 320, 330, 340, 350 and 360 for generating the torque calculated by the dynamics calculating section 107. The drive current determining section 108 holds data of a correspondence table in which torque sizes and drive current values are associated for each of the stepping motors 310, 320, 330, 340, 350 and 360. The drive current determining section 108 refers to the correspondence table and determines the drive current values that correspond to the respective torque sizes of the joints J1 to J6 that were calculated by the dynamics calculating section 107.

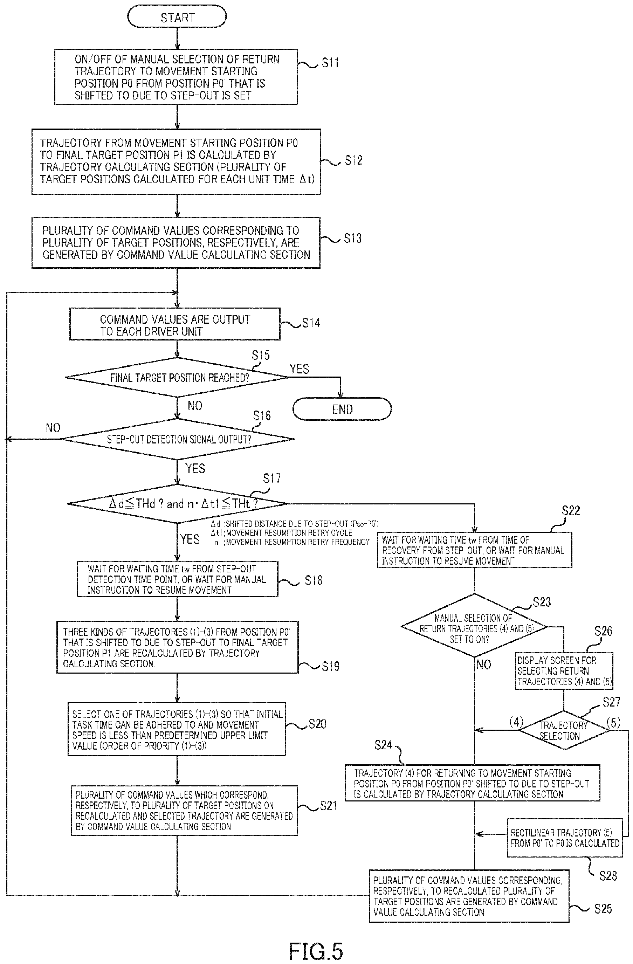

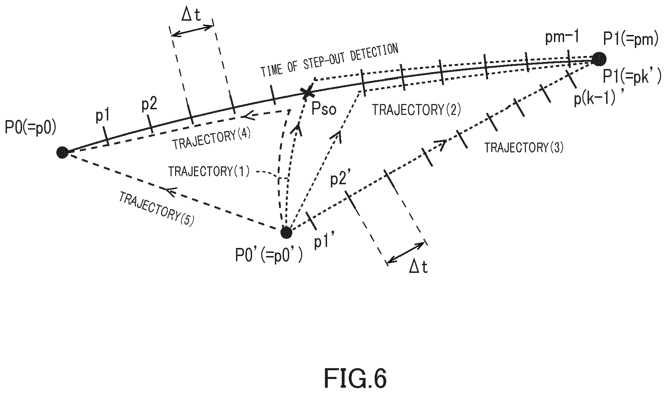

### (Procedures for Dealing with a Step-Out) FIG. 5, FIG. 6

Hereunder, procedures for dealing with the occurrence of a step-out that are performed by the operation control device 100 of the robot device according to the present embodiment are described referring to FIG. 5, and a supplementary description thereof is given referring to FIG. 6. FIG. 5 is a flowchart for describing processing procedures that are executed by the operation control device 100 shown in FIG. 4 when a step-out occurs. FIG. 6 is a view illustrating a first to fifth trajectory (1) to (5). The respective sections of the operation control device 100 are operated according to the flowchart shown in FIG. 5 in accordance with the control of the system control section 101.

### (Step S11) Input of final target position etc.

When an end movement is to be performed, first the final target position of the end attention point is input through the operation section interface 102. By performing step S11, the final target position P1 is input as illustrated in FIG. 6. Further, in step S11, with respect to after the occurrence of a step-out, a setting is made regarding whether or not to resume movement after waiting for a manual instruction by the operator (manual resumption on/off), and in a case where manual resumption is set to "off", a waiting time tw for which to wait until resuming movement after the occurrence of a step-out is also set. The waiting time tw can be set to a value of 0 or more. In a case where the waiting time tw is set to 0 hours, it means that immediate resumption of movement is allowed. Further, after the step-out occurrence, a setting is made with regard to whether or not the operator is to manually select either one of the trajectories (4) and (5) that have mutually different return routes, when returning to the position (movement starting position) P0 from which movement started.

### (Step S12) Computational processing of end trajectory

The end trajectory from the current position (movement starting position) of the end attention point to the final target position that is input in step S11 is calculated by the trajectory calculating section 105. The trajectory calculating section 105 sets a plurality of target positions that are for each unit time Δt on the end trajectory from the current position of the end attention point to the final target position. In the example illustrated in FIG. 6, an end trajectory linking the current position P0 and the final target position P1 is calculated, and a plurality of target positions (p1, p2, ... pm-1, pm (=P1)) for each unit time Δt are set on the end trajectory. The current position P0 of the end attention is obtained based on computational processing by the current position and posture calculating section 104. Specifically, based on count values that were counted by the counter 217 of each of the driver units 210, 220, 230, 240, 250 and 260, the current position and posture calculating section 104 calculates the current joint variable vector -θ₀ (θ_{0-J1}, θ_{0-J2}, L_{0-J3}, θ_{0-J4}, θ_{0-J5}, θ_{0-J6}), and calculates the current position P0 of the end by forward kinematics based on the joint variable vector -θ₀.

### (Step S13) Computational processing of command values (joint variable vectors) of joints J1 to J6

The command value calculating section 106 calculates a plurality of joint variable vectors representing the angle and extension distance of each joint that respectively correspond to the plurality of target positions calculated in step S12. By the processing in step S13, a plurality of joint variable vectors (-θ₁, -θ₂ ... -θₘ) that respectively correspond to a plurality of target positions (p1, p2 ... pm-1, pm (=P1)) illustrated in FIG. 6 are calculated. The details of the computational processing procedures performed by the command value calculating section 106 are described later.

### (Step S14) Command value output processing

Position command signals corresponding to the joint variable vectors calculated in step S13, and drive current command signal corresponding to drive current values determined by the drive current determining section 108 are sequentially output at a predetermined control period Δt (for example, 10 ms) from the command value outputting section 103 to the driver units 210, 220, 230, 240, 250 and 260. By means of the processing in step S14, the end is moved from the current position P0 to the final target position P1 by passing through the target positions p1, p2 ... pm-1 in sequence during each control period Δt.

### (Step S15) Processing to determine whether end arrives at final target position

The system control section 101 determines whether or not the end arrives at the final target position. Specifically, the current position and posture calculating section 104 compares the current position of the end that is calculated for each control period Δt with the final target position P1 shown in FIG. 6. When the current position of the end matches the final target position, it is determined that the end arrives at the final target position. At such time, the series of control operations by the operation control device 100 is completed. In contrast, when the current position of the end does not match the final target position of the end, the processing is transitioned to step S16.

### (Step S16) Processing to determine occurrence or non-occurrence of step-out

The occurrence or non-occurrence of a step-out is determined by the system control section 101. Specifically, when a step-out detection signal is input to the operation control device 100 from the step-out determining section 216, the processing is transitioned to step S17. In the example illustrated in FIG. 6, the position of the end at the time point of the step-out detection is taken as Pso, and it is assumed that due to some external cause, for example, that the worker contacts the arm section 2 of the robot arm mechanism, the end is moved to a position P0'. On the other hand, if a step-out detection signal is not output from the step-out determining section 216, position command signals and drive current command signals are sequentially output at the predetermined control period Δt until the current position of the end arrives at the final target position of the end.

### (Step S17) Reperformance of computational processing of end trajectory at time of step-out occurrence

In step S17, the system control section 101 determines whether to ensures to the original final target position P1 as the position to be reached when end movement is resumed after detection of a step-out or to change from the original final target position P1 to the position P0 that is the position at the time that movement started, based on a distance Δd by which the end shifted due to the step-out, that is, a distance (shifted distance) Δd between the position Pso of the end on the initial trajectory at the time point that the step-out is detected and the end position P0' to which the end is shifted after the step-out occurrence, and an elapsed time (n•Δt1) from step-out detection until a time that the step-out is corrected and movement can be resumed. The system control section 101 determines whether or not a condition is satisfied that the shifted distance Δd caused by the step-out is less than a predetermined threshold THd and the (n•Δt1) until resumption of movement from the time of step-out detection is less than a predetermined threshold THt. Hereunder, the elapsed time (n•Δt1) is referred to as "downtime" that is caused by the step-out. Note that, after step-out detection, the operation control device 100 controls the driver unit 210 to repeatedly output command values for resumption of movement and retries to resume movement. The repetition cycle (retry cycle) is represented by Δt1, and the repetition frequency (retry frequency) is represented by n. A state in which the number of pulse signals from the pulse signal generating section 213 and the number of encoder pulses are matching, that is, a state in which the pulse signals and rotation are synchronized, is a state in which the step-out is corrected, and resumption of movement is possible in that state. Control to retry resumption of movement is repeated until the aforementioned state is reached.

In step S17, when the end position does not deviate by a large margin from the original trajectory due to the step-out (the shifted distance Δd is comparatively short) and a long time period has not elapsed from occurrence of the step-out until the step-out is corrected (the downtime n•Δt1 is comparatively short), movement is resumed with the aim of reaching the original final target position. In contrast, when the end position deviates by a large margin from the original trajectory due to the step-out (the shifted distance Δd is comparatively long) and/or a long time period has elapsed from occurrence of the step-out until the step-out is corrected (the downtime n•Δt1 is comparatively long), the original final target position is cancelled and the end position returns to the movement starting position to wait for the next task.

Note that, the threshold THd that is compared with the shifted distance Δd for determining whether the shifted distance Δd is long or short and the threshold THt that is compared with the downtime (n•Δt1) for determining whether the downtime (n•Δt1) is long or short are dynamically changed by the system control section 101. For example, when the position Pso at the time of step-out detection is closer to the movement starting position P0 than to the final target position PI, the aforementioned values are set to comparatively small values, while when the position Pso at the time of step-out detection is closer to the final target position P1 than to the movement starting position P0, the aforementioned values are set to comparatively large values.

When the result of the determination in step S17 is "YES", that is, when it is determined that movement is to be resumed to aim to reach the original final target position, in step S18 the system control section 101 waits to resume movement until a movement resumption instruction is input by the operator. Further, in a case where the setting for manual instruction of movement resumption by the operator is set to "off" in step S11, the system control section 101 waits for the waiting time tw that is set in step S11 to elapse from the time point at which the step-out is detected. These procedures are provided to ensure safety when resuming movement.

When a movement resumption instruction is input by the operator or when the waiting time tw elapses in step S18, output of command values in accordance with the selected trajectory is performed by the processing in steps S19 to S21 to thereby resume movement. In practice, trajectory recalculation in step S19 and trajectory selection in step S20 are executed in parallel with step S18. In step S19, the three kinds of trajectories (1) to (3) illustrated in FIG. 6 are calculated by the trajectory calculating section 105.

The first trajectory (1) is a trajectory that starts from the position (position at the time of movement resumption) P0' of the attention point of the hand that is shifted due to the step-out, and returns to the step-out detection position Pso on the initial trajectory from the movement starting position P0 to the final target position P1 by following the route along which the attention point deviated due to the step-out from the initial trajectory, and then arrives at the final target position along the initial trajectory.

The second trajectory (2) is a trajectory that starts from the position (position at the time of movement resumption) P0' of the attention point of the hand that is shifted due to the step-out, and moves to a position that is between the position Pso at the time of step-out detection and the final target position PI, and then arrives at the final target position along the initial trajectory. The third trajectory (3) is a rectilinear shortest trajectory from the position P0' of the attention point that is shifted due to the step-out to the final target position P1.

Next, in step S20, one trajectory is selected from these three kinds of trajectories (1) to (3) by the trajectory calculating section 105 or the system control section 101. In this case, from the viewpoint of safety the first trajectory (1) is set as first in the order of priority, the second trajectory (2) as second in the order of priority, and the third trajectory (3) is set as third in the order of priority. Here, whether or not a task time that is originally set for movement from the initial movement starting position P0 to the final target position P1 can be ensured to while keeping the movement speed of the end attention point within a range that is less than a predefined speed upper limit is applied as a selection condition. If the first trajectory (1) which has the longest trajectory length and for which the safety is assumed to be highest satisfies the aforementioned selection condition, the first trajectory (1) is selected. If the first trajectory (1) does not satisfy the selection condition, it is determined whether the second trajectory (2) which has the next longest trajectory length and for which the safety is assumed to be the next highest satisfies the selection condition, and if the second trajectory (2) satisfies the selection condition the second trajectory (2) is selected. If both the first and second trajectories (1) and (2) do not satisfy the selection condition, the third trajectory (3) which is the shortest route to the final target position P1 is selected if the third trajectory (3) satisfies the selection condition. Note that, the operations for a time when the third trajectory (3) does not satisfy the selection condition are arbitrarily set, and typically a setting may be made so that the attention point stays at the movement resumption position P0', or so that the fourth trajectory (4) is selected so as to return to the movement starting position P0 and standby for the next task.

In step S21, command values representing a plurality of joint variable vectors that correspond, respectively, to the plurality of target positions on the trajectory selected in step S20 are calculated by the command value calculating section 106, and are output to the driver units 210, 220, 230, 240, 250 and 260 from the command value outputting section 103 together with command signals representing drive current values for each position that are determined by the drive current determining section 108, in a sequential order at periods of the predetermined control period Δt.

When the result determined in step S17 is "NO", that is, when it is determined to resume movement and return to the original movement starting position P0 by following either one of the return trajectories (4) and (5), in step S22 the system control section 101 waits to resume movement until a movement resumption instruction is input by the operator, or waits until the waiting time tw that is set in step S11 elapses from the time point at which the step-out is detected.

Upon the movement resumption instruction being input by the operator or upon the waiting time tw elapsing in step S22, the processing transitions to step S23. If it is determined in step S23 that a "function for manual selection of return trajectory (4) or (5) to return to movement starting position P0" that is set in step S11 is set to "off", in step S24 the return trajectory (4) to return to the original movement starting position P0 from the position (position at time of movement resumption) P0' of the attention point of the hand that is shifted due to the step-out is calculated by the trajectory calculating section 105.

The return trajectory (4) is a trajectory that starts from the position P0' at the time of movement resumption and returns to the step-out detection position Pso by following the route along which the attention point deviated due to the step-out from the initial trajectory that arrives at the final target position P1 from the movement starting position P0, and then arrives at the original movement starting position P0 by going back along the initial trajectory. On the other hand, the fifth trajectory (5) is a rectilinear shortest return trajectory from the position (movement resumption position) P0' of the attention point that shifts due to the step-out to the original movement starting position P0. Since the return trajectory (4) is the route that the hand passed along immediately prior to the current time, it can be said that the possibility that obstacles or the like are present on the trajectory is lower from the return trajectory (4) than for the new fifth trajectory (5), that is, that the return trajectory (4) provides a higher degree of safety. Therefore, a configuration is adopted so that, in a case where the operator does not manually select the trajectory, the return trajectory (4) is selected with priority over the return trajectory (5).

In step S25, command values representing a plurality of joint variable vectors that correspond, respectively, to the plurality of target positions on the trajectory (4) calculated in step S24 are calculated by the command value calculating section 106, and are output to the driver units 210, 220, 230, 240, 250 and 260 from the command value outputting section 103 together with command signals representing drive current values for each position that are determined by the drive current determining section 108, in a sequential order at periods of the predetermined control period Δt.

If it is determined in step S23 that the "function for manual selection of return trajectory (4) or (5) to return to movement starting position P0" that is set in step S11 is set to "on", in step S26 a screen for prompting the operator to select either one of the return trajectory (4) and the fifth trajectory (5) is displayed on a display of the operation section 50 by the system control section 101. If the operator selects the return trajectory (4), the processing transitions to step S24. If the operator selects the return trajectory (5), in step S28 the trajectory calculating section 105 calculates the return trajectory (5) for returning rectilinearly by the shortest distance to the original movement starting position P0 from the position (position at the time of movement resumption) P0' of the attention point of the hand that is shifted due to the step-out, and the processing then transitions to step S25.

The above described steps S14 to S28 are repeated through step S15 until the end attention point of the hand 5 arrives at the final target position P1 or returns to the movement starting position P0.

Although adopting a stepping motor as an actuator of a robot arm in this way has been difficult because operation stops due to the occurrence of a step-out of the stepping motor, as described above, when a step-out occurs the trajectory to the final target position from the position at the time the step-out occurs can be recalculated and the end movement can be resumed along the recalculated trajectory, and furthermore in a case where the task time cannot be ensured to, the end movement can be resumed to return to the original movement starting position and wait for the next task command. These working effects can facilitate the adoption of a stepping motor as an actuator of a robot arm.

Adoption of the control for resuming movement at the time of a step-out according to the present embodiment means that the novel idea that a step-out which is a unique characteristic of a stepping motor can be utilized to improve safety is actually put into practical use. Heretofore, it has been necessary to provide a safety mechanism such as a mechanism whereby, when a worker comes in contact with a robot arm, the contact is detected by an acceleration sensor or the like and operations are stopped. However, when a worker comes in contact with a robot arm which adopts a stepping motor, a step-out occurs due to the load produced by the contact, and operations stop. Therefore, safety of the same level as the conventional safety mechanism can be ensured.

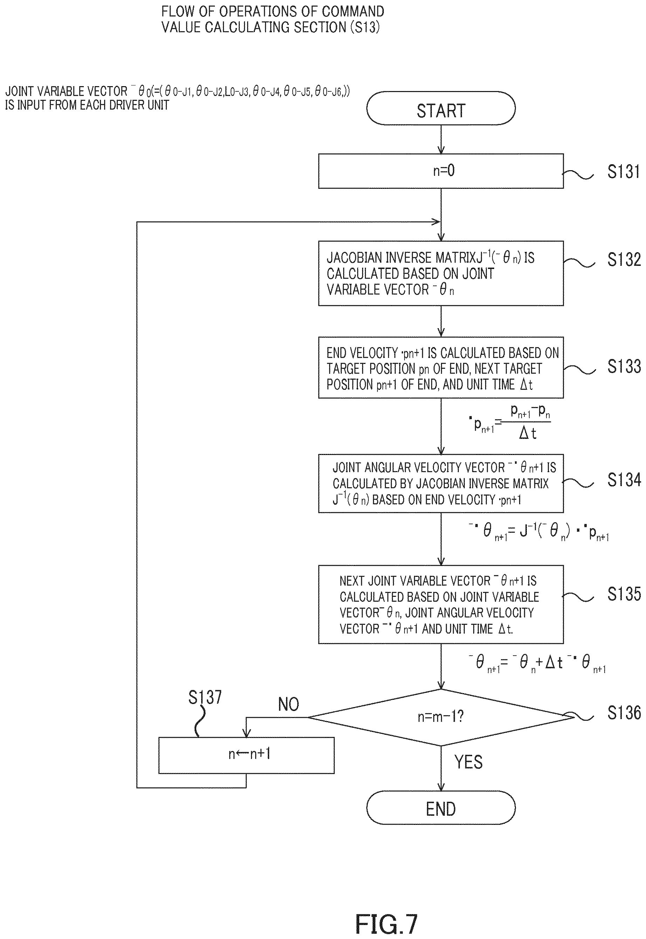

### (Description of processing of command value calculating section) FIG. 7

Next, processing for calculating a command value that is performed by the command value calculating section 106 in steps S21 and S24 is described referring to FIG. 7.

### (Step S131) Initialization (n = 0)

For convenience in the present description, a variable n is used. First, the variable n is initialized to a zero value.

### (Step S132) Calculation of Jacobian inverse matrix J⁻¹(-θn)

In the robot arm mechanism of the robot device of the present embodiment, singular points do not exist in the structure thereof, and therefore a Jacobian inverse matrix always exists. The Jacobian inverse matrix is a matrix that converts an end velocity (minute changes in the end position and posture) to a joint angular velocity (minute changes in the joint angle and extension and retraction length). The Jacobian inverse matrix is given by partial derivatives generated by joint variables of a vector representing the end position and end posture. The command value calculating section 106 calculates a Jacobian inverse matrix J⁻¹(-θn) in accordance with the link parameters of the arm structure based on the current joint variable vector -θn (θ_{n-J1}, θ_{n-J2}, L_{n-J3}, θ_{n-J4}, θ_{n-J5}, θ_{n-J6}) that is calculated by the current position and posture calculating section 104 in step S12.

### (Step S133) Calculation of end velocity -pn+1

An end velocity -pn+1 is calculated based on a current end position (current target position) pn, a next end position (next target position after the unit time Δt) pn+1, and the unit time Δt.

### (Step S134) Calculation of joint angular velocity -θn+1

The end velocity -pn+1 calculated in step S133 is converted to a joint angular velocity -·θn+1 by the Jacobian inverse matrix J⁻¹(-θn).

### (Step S135) Calculation of target joint variable vector -θn+1

The next joint variable vector -θn+1 is calculated based on the joint variable vector -θn for which the repetition frequency is calculated in the previous step S135 (is calculated in step S11 in a case where the variable n = 0), the joint angular velocity -·θn+ 1 calculated in step S134, and the unit time Δt. The displacement amount of each joint during the unit time Δt is calculated by multiplying the joint angular velocity -·θn+1 by the unit time Δt. The joint variable vector -θn+1 after the unit time Δt elapses is calculated by adding the displacement amounts of the joints to the joint variable vector -θn at the time immediately prior to movement.

### (Step S136) Determination regarding continuation of processing

When the variable n is a repetition frequency (m-1), the computational processing by the command value calculating section 106 is ended. On the other hand, when the variable n is not the repetition frequency (m-1), the processing transitions to step S137.

### (Step S137) Raising of variable n←n+1

The variable n is raised to (n+1), and the processing returns to step S142.

By means of the computational processing performed by the command value calculating section 106 that is described above, joint variable vectors (-θ1, -θ2 ... -θm) that respectively correspond to target positions (p1, p2 ... pm) of the end are calculated.

### (Effects)

As described in the foregoing, in the robot device according to the present embodiment, stepping motors 310 to 360 are provided for the joints J1-J6, respectively, which constitute the robot arm mechanism. The operations of the stepping motor 310 to 360 are controlled by the operation control device 100. A stepping motor is not used for common industrial robots because a step-out will occur if a load that is greater than the torque of the stepping motor is applied to the stepping motor. However, in the robot device according to the present embodiment, there are no singular points in the structure thereof, and therefore because the arm does not perform a large turning movement or the like to avoid a singular point at an unexpected timing, the robot device according to the present embodiment can be used, for example, as a co-robot device that performs work in cooperation with a worker. That is, the robot device according to the present embodiment can be disposed adjacent to a worker. Therefore, by positively using a stepping motor as the actuator of a joint, even in a case where a worker contacts the arm of the robot device, because a step-out occurs if a load that is equal to or greater than the required torque of the stepping motor is applied to the stepping motor, the arm will not inflict an injury on the worker with a large force that is equal to or greater than the required torque of the stepping motor. Consequently, by using a stepping motor as the actuator of a joint, the risk of injury or the like to a worker due to the arm contacting the worker can be lowered in comparison to the case of using a different motor, for example, an AC motor.

Thus, it is assumed that, in a presumed installation environment of the robot device of the present embodiment, a worker will contact the arm, and the stepping motor will step-out. In such a case, the position after the step-out will sometimes deviate from a position on the scheduled end trajectory. However, in the robot device of the present embodiment, when a step-out occurs in the stepping motors 310 to 360, the trajectory calculating section 105 of the operation control device 100 can recalculate an end trajectory from the current position of the end after step-out detection to the final target position of the end. Accordingly, even in a case where a step-out occurs, control of the movement of the end is continued and the end can be moved once again from the position after step-out detection to the final target position. Thereby, even when a step-out has occurred, because control of the movement of the end is not interrupted and it is also not necessary to return the end temporarily to the reference position, the downtime can be shortened. Therefore, on the premise that step-outs will occur in a stepping motor, the robot device according to the present embodiment can provide a suitable countermeasure for a time when a step-out occurs.

Although stepping motor control has been described in the present embodiment by taking a robot device as an example, a stepping motor can also be adopted for other operation objects, for example as an actuator for line movement of a conveyor apparatus, and the stepping motor control of the present invention can also be applied thereto. In such a case, a process in which a line as an operation object changes from a current state (current speed) to a target state (target speed) is calculated, and command values that are in accordance with that process are output. If a step-out occurs at the stepping motor during the process, the process from the speed of the line at the time point at which the step-out occurs to the target speed is recalculated, and the speed of the line is changed in a stepwise manner in accordance with the recalculated process. Such an application is also within the scope of the concept of the present embodiment.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

### REFERENCE SIGNS LIST

50... operation section, 100... operation control device, 101... system control section, 102... operation section I/F, 103... command value outputting section, 104... current position and posture calculating section, 105... trajectory calculating section, 106... command value calculating section, 107... dynamics calculating section, 108... drive current determining section, 109... driver unit I/F, 110... control/data bus, 210 to 260... driver unit, 310... stepping motor, 211... control section, 212... power supply circuit, 213... pulse signal generating section, 215... encoder, 216... step-out determining section, 217... counter.

## Claims

1. A robot device, comprising:
a robot arm mechanism having a joint;
a stepping motor that generates motive power that actuates the joint;
a motor driver that drives the stepping motor;
a trajectory calculating section that calculates a trajectory along which an attention point of the robot arm mechanism moves from a movement starting position that is a current position to a final target position;
a command value outputting section that outputs a command value in accordance with the trajectory that is calculated by the trajectory calculating section to the motor driver;
a step-out detecting section that detects a step-out of the stepping motor; and
a system control section that, when the step-out is detected, controls the trajectory calculating section and the command value outputting section to recalculate a trajectory from a position of the attention point that is shifted due to the step-out to the final target position and to move the attention point in accordance with the recalculated trajectory.

2. The robot device according to claim 1, wherein:
the trajectory calculating section recalculates a first trajectory that starts from a position of the attention point that is shifted due to the step-out and returns to an initial trajectory from the movement starting position to the final target position and arrives at the final target position, and a rectilinear second trajectory from a position of the attention point that is shifted due to the step-out to the final target position.

3. The robot device according to claim 2, wherein:
the system control section selects one of the first trajectory and the second trajectory based on a movement speed of the attention point that is required for ensuring to a task time that is scheduled according to the initial trajectory.

4. The robot device according to claim 3, wherein:
the system control section selects the first trajectory with priority when a scheduled movement speed of the attention point along the first trajectory is less than a predetermined upper limit value, and selects the second trajectory when a scheduled movement speed of the attention point along the first trajectory is equal to or greater than the predetermined upper limit value.

5. The robot device according to claim 4, wherein:
the system control section controls the command value outputting section to cause movement of the attention point to resume in accordance with the first trajectory or the second trajectory after a predetermined waiting time passes from a time point at which the step-out is detected.

6. The robot device according to claim 4, wherein:
the system control section controls the command value outputting section so as to wait for a movement resumption instruction of a user that is given after the step-out is detected, and to resume movement of the attention point in accordance with the first trajectory or the second trajectory upon receiving the movement resumption instruction.

7. The robot device according to claim 1, wherein:
a first trajectory that starts from a position of the attention point that is shifted due to the step-out and returns to an initial trajectory from the movement starting position to the final target position by following a route along which the attention point deviated due to the step-out from the initial trajectory and reaches the final target position, a second trajectory that starts from the position of the attention point that is shifted due to the step-out and returns to the initial trajectory by following a route that is different to the route along which the attention point deviated due to the step-out from the initial trajectory and reaches the final target position, and a rectilinear third trajectory from the position of the attention point that is shifted due to the step-out to the final target position are recalculated by the trajectory calculating section.

8. A robot device, comprising:
a robot arm mechanism having a joint;
a stepping motor that generates motive power that actuates the joint;
a motor driver that drives the stepping motor;
a trajectory calculating section that calculates a trajectory along which an attention point of the robot arm mechanism moves from a movement starting position that is a current position to a final target position;
a command value outputting section that outputs a command value in accordance with the trajectory calculated by the trajectory calculating section to the motor driver;
a step-out detecting section that detects a step-out of the stepping motor; and
a system control section that, when the step-out is detected, controls the trajectory calculating section and the command value outputting section so as to calculate a trajectory that returns to the movement starting position from a position of the attention point that is shifted due to the step-out, and to return the attention point to the movement starting position along the calculated trajectory.

9. A robot device, comprising:
a robot arm mechanism having a joint;
a stepping motor that generates motive power that actuates the joint;
a motor driver that drives the stepping motor;
a trajectory calculating section that calculates a trajectory along which an attention point of the robot arm mechanism moves from a movement starting position that is a current position to a final target position;
a command value outputting section that outputs a command value in accordance with the trajectory calculated by the trajectory calculating section to the motor driver;
a step-out detecting section that detects a step-out of the stepping motor; and
a system control section that, when the step-out is detected, controls the trajectory calculating section and the command value outputting section so as to, when a shifted distance of the attention point that is shifted due to the step-out from the trajectory is less than or equal to a predetermined distance and a delay time from a time point at which the step-out is detected to a time point of recovery from the step-out is less than or equal to a predetermined time, move the attention point along a trajectory from a position of the attention point that is shifted due to the step-out to the final target position, and when the shifted distance is not less than or equal to the predetermined distance or the delay time is not less than or equal to the predetermined time, return the attention point from the position of the attention point that is shifted due to the step-out to the movement starting position.

10. A stepping motor control device that controls a stepping motor that generates motive power that actuates a joint that is mounted in a robot arm mechanism, comprising:
a trajectory calculating section that calculates a trajectory along which an attention point of the robot arm mechanism moves from a current position to a final target position;
a command value outputting section that outputs a command value in accordance with the trajectory calculated by the trajectory calculating section to the motor driver;
a step-out detecting section that detects a step-out of the stepping motor; and
a system control section that, when the step-out is detected, controls the trajectory calculating section and the command value outputting section so as to recalculate a trajectory from a position of the attention point that is shifted due to the step-out to the final target position and to move the attention point in accordance with the recalculated trajectory.

11. A stepping motor control device that controls a stepping motor that generates motive power that actuates a joint that is mounted in a robot arm mechanism, comprising:
a trajectory calculating section that calculates a trajectory along which an attention point of the robot arm mechanism moves from a movement starting position that is a current position to a final target position;
a command value outputting section that outputs a command value in accordance with the trajectory calculated by the trajectory calculating section to the motor driver;
a step-out detecting section that detects a step-out of the stepping motor; and
a system control section that, when the step-out is detected, controls the trajectory calculating section and the command value outputting section so as to calculate a trajectory that returns to the movement starting position from a position of the attention point that is shifted due to the step-out, and to return the attention point to the movement starting position along the calculated trajectory.

12. A stepping motor control device that controls a stepping motor that generates motive power that actuates a joint that is mounted in a robot arm mechanism, comprising:
a trajectory calculating section that calculates a trajectory along which an attention point of the robot arm mechanism moves from a movement starting position that is a current position to a final target position;
a command value outputting section that outputs a command value in accordance with the trajectory calculated by the trajectory calculating section to the motor driver;
a step-out detecting section that detects a step-out of the stepping motor; and
a system control section that, when the step-out is detected, controls the trajectory calculating section and the command value outputting section so as to calculate a trajectory that returns to the movement starting position from a position of the attention point that is shifted due to the step-out, and to return the attention point to the movement starting position along the calculated trajectory.

13. A stepping motor control device that controls a stepping motor that generates motive power that actuates a joint that is mounted in a robot arm mechanism, comprising:
a trajectory calculating section that calculates a trajectory along which an attention point of the robot arm mechanism moves from a movement starting position that is a current position to a final target position;
a command value outputting section that outputs a command value in accordance with the trajectory calculated by the trajectory calculating section to the motor driver;
a step-out detecting section that detects a step-out of the stepping motor; and
a system control section that, when the step-out is detected, controls the trajectory calculating section and the command value outputting section so as to, when a shifted distance of the attention point that is shifted due to the step-out from the trajectory is less than or equal to a predetermined distance and a delay time from a time point at which the step-out is detected to a time point of recovery from the step-out is less than or equal to a predetermined time, move the attention point along a trajectory from a position of the attention point that is shifted due to the step-out to the final target position, and when the shifted distance is not less than or equal to the predetermined distance or the delay time is not less than or equal to the predetermined time, return the attention point from the position of the attention point that is shifted due to the step-out to the movement starting position.
